# EUROPEAN PATENT APPLICATION

(11) **EP 4 722 675 A1**
(43) Date of publication of application: **08.04.2026**
(21) Application number: 25199288.9
(22) Date of filing: 01.09.2025
(51) Int. Cl.: G01L 19/00

(54) **SENSING DEVICE**

(30) Priority: 04.10.2024 IN 202411075202
(71) Applicant: Honeywell International Inc., Charlotte, NC 28202 (US)
(72) Inventor: JAIN, Rajani Niranjan, Charlotte, 28202 (US); HEGDE, Santosh Nagapati, Charlotte, 28202 (US); MAUT, Sandeep Laxman, Charlotte, 28202 (US)
(74) Representative: Haseltine Lake Kempner LLP

(57) **Abstract**

A sensing device is disclosed. The sensing device comprises a housing that defines an orifice and a gel positioned within the orifice of the housing and undergoes a change in one or more attributes based on change in temperature or pressure. Further, a membrane is positioned over the orifice and in contact with the gel. The membrane is configured to be positioned in contact with an intravenous (IV) tube carrying media. Further, at least one sensing element is operationally coupled to the gel and detects the change in the one or more attributes of the gel. Thereafter, at least one processing unit is operationally coupled to the at least one sensing element and is configured to determine a temperature output and a pressure output of the media within the IV tube based on the detected change in the one or more attributes of the gel.

## Description

### TECHNOLOGICAL FIELD

Example embodiments of the present disclosure relate generally to a sensing device, and more particularly, to a sensing device for an infusion pump and a method thereof.

### BACKGROUND

Infusion pumps are medical devices commonly used to deliver fluids, such as nutrients and medications, into a patient's body in controlled amounts. Infusion pumps are widely used in healthcare settings for precise administration of intravenous (IV) therapies, ensuring that patients receive correct dosage at a right rate. Typically, modern infusion pumps are equipped with various sensors, including temperature sensors like thermistors, to monitor the temperature of the IV fluids during delivery. However, the use of thermistors in the infusion pumps has a significant drawback that they create a high resistance channel for heat transfer. Such resistance leads to a delay in the pump's response time, which in turn affects the accuracy and timeliness of drug delivery, and thus degrades the efficiency and safety of infusion therapy.

The inventors identified numerous deficiencies and problems in in existing technologies and processes, which are the subjects of embodiments described herein. Through applied effort, ingenuity, and innovation, many of these deficiencies and problems have been solved by developing solutions that are included in embodiments of the present disclosure, many examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a sensing device is disclosed. The sensing device comprising a housing that defines an orifice, a gel positioned within the orifice of the housing. Further, the gel is configured to undergo a change in one or more attributes based on change in temperature or pressure, a membrane positioned over the orifice and in contact with the gel. Further, the membrane is configured to be positioned in contact with an intravenous (IV) tube carrying media, at least one sensing element operationally coupled to the gel. Further, the at least one sensing element is configured to detect the change in the one or more attributes of the gel, at least one processing unit operationally coupled to the at least one sensing element. Further, the at least one processing unit is configured to determine a temperature output and a pressure output of the media within the IV tube based on the detected change in the one or more attributes of the gel.

In some embodiments, the media is intravenous (IV) fluid. In some embodiments, the membrane is a silicon membrane.

In some embodiments, the gel is a bio compatible high thermal conductivity gel that has a thermal conductivity of 1.2 watts per meter-kelvin (W/(m·K)) or higher.

In some embodiments, the one or more attributes comprises at least one or more physical attributes and one or more thermal attributes. In some embodiments, the at least one sensing element comprises at least one pressure sensing element (P) for sensing the one or more physical attributes and at least one temperature sensing element (T) for sensing the one or more thermal attributes. In some embodiments, the at least one pressure sensing element (P) is at least one Wheatstone bridge and the at least one temperature sensing element (T) is at least one resistor.

In some embodiments, a circuit board positioned within the housing. Further, the circuit board is coupled with the at least one sensing element and the at least one processing unit. In some embodiments, the at least one sensing element is positioned within the orifice of the housing and in contact with the gel.

In some embodiments, the at least one processing unit corresponds to an application specific integrated circuit (ASIC).

In some embodiments, the at least one processing unit is configured to calibrate the determined temperature output and pressure output of the media based at least on one or more coefficients, to determine a compensated temperature output and a compensated pressure output of the media.

In another example embodiment, a method is disclosed. The method comprising undergoing a change in one or more attributes of a gel positioned within an orifice defined by a housing of a sensing device based on change in temperature or pressure. Further, the sensing device comprises a membrane positioned over the orifice and in contact with the gel, and the membrane is positioned in contact with an intravenous (IV) tube carrying media; detecting, via at least one sensing element operationally coupled to the gel, the change in the one or more attributes of the gel; and determining, via at least one processing unit operationally coupled to the at least one sensing element, a temperature output and a pressure output of the media within the IV tube based on the detected change in the one or more attributes of the gel.

The above summary is provided merely for purposes of summarizing some exemplary embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates an isometric view of a sensing device in accordance with an example embodiment of the present disclosure;
FIG. 2 illustrates a sectional view of the sensing device in accordance with an example embodiment of the present disclosure;
FIG. 3A illustrates a side view of a circuit board of the sensing device in accordance with an example embodiment of the present disclosure;
FIG. 3B illustrates a top view of the circuit board in accordance with an example embodiment of the present disclosure;
FIG. 3C illustrates an isometric view of the circuit board in accordance with an example embodiment of the present disclosure;
FIG. 3D illustrates another isometric view of the circuit board in accordance with an example embodiment of the present disclosure;
FIG. 4 illustrates a circuit diagram of the sensing device in accordance with an example embodiment of the present disclosure;
FIG. 5 illustrates a table showing calibration data associated with the sensing device in accordance with an example embodiment of the present disclosure; and
FIG. 6 illustrates a flowchart showing a method performed by the sensing device in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a sensing device. Embodiments of the present disclosure may comprise a housing that defines an orifice. Embodiments may comprise a gel that may be positioned within the orifice of the housing. The gel may be configured to undergo a change in one or more attributes of the gel based on change in temperature or pressure. Embodiments may comprise a membrane that may be positioned over the orifice and in contact with the gel. The membrane may be configured to be positioned in contact with an intravenous (IV) tube carrying media. Embodiments may comprise at least one sensing element that is operationally coupled to the gel. The at least one sensing element may be configured to detect the change in the one or more attributes of the gel. Embodiments may comprise at least one processing unit that is operationally coupled to the at least one sensing element. The at least one processing unit may be configured to determine a temperature output and a pressure output of the media within the IV tube based on the detected change in the one or more attributes of the gel.

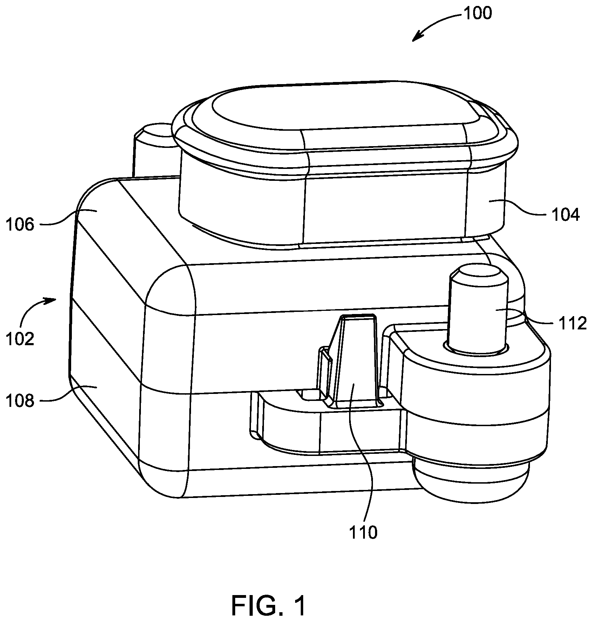

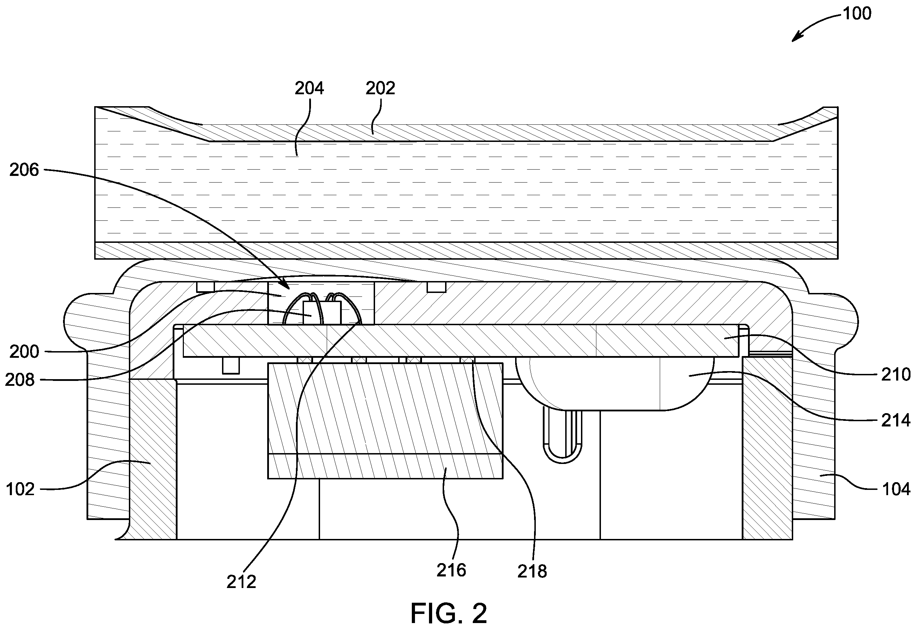

FIG. 1 illustrates an isometric view of a sensing device 100, in accordance with an example embodiment of the present disclosure. FIG. 2 illustrates a sectional view of the sensing device 100, in accordance with an example embodiment of the present disclosure.

In some embodiments, the sensing device 100 may comprise a housing 102 and a membrane 104. In some embodiments, the sensing device 100 may be installed within an infusion pump (not shown). In some embodiments, the infusion pump may be installed within a medical facility (not shown). The medical facility may include, but is not limited to, a hospital or a clinic. In some embodiments, the infusion pump may be configured to administrate required nutrients and medications into a patient's body. In some embodiments, the infusion pump may comprise an intravenous (IV) tube 202 (FIG. 2). In some embodiments, the IV tube 202 may be connected with a cartridge (not shown) containing a media 204 (FIG. 2). The media 204 may correspond to an intravenous (IV) fluid. In some embodiments, the IV tube 202 may be configured to supply the media 204 from the cartridge to the infusion pump. In some embodiments, the sensing device 100 may be installed within the infusion pump.

In some embodiments, the sensing device 100 may comprise the housing 102. In some embodiments, the housing 102 of the sensing device 100 may be configured to encase one or more components associated with the sensing device 100. In some embodiments, the housing 102 may be constructed with various shapes. The shapes may include, but are not limited to, a cube shape, cuboid shape, trapezium shape etc. In some embodiments, the housing 102 may be constructed with various materials. The materials may include, but are not limited to, polycarbonate, plastic, metal etc. In some embodiments, the housing 102 may comprise a top cover 106 and a bottom cover 108. In some embodiments, the top cover 106 of the housing 102 may be coupled with the bottom cover 108 of the housing 102 through one or more latches 110. In some embodiments, the one or more latches 110 of the housing 102 may be configured to removably couple the top cover 106 of the housing 102 with the bottom cover 108 of the housing 102. In some embodiments, the housing 102 may be positioned inside the infusion pump. In some embodiments, the housing 102 may be secured inside the infusion pump through one or more fasteners 112. The one or more fasteners 112 may comprise at least one of bolted-screws, rivets etc.

In some embodiments, the sensing device 100 may comprise the membrane 104. In some embodiments, the membrane 104 of the sensing device 100 may be positioned between the top cover 106 of the housing 102 and the IV tube 202 carrying the media 204. In some embodiments, the membrane 104 of the sensing device 100 may be mounted on the top cover 106 of the housing 102. In some embodiments, the membrane 104 may be configured to be in contact with the IV tube 202 of the infusion pump. In some embodiments, the membrane 104 may be constructed with various shapes. The shapes may include, but are not limited to, a cuboidal shape, a capsule shape etc. In various examples, the membrane 104 may be made from a flexible material that is highly responsive to pressure and temperature changes. The material of the membrane 104 may include, but is not limited to, silicone, polyurethane, or other elastomers. The material may be selected based on the ability to transmit pressure and thermal changes efficiently. In various examples, the membrane 104 is a silicon membrane.

As illustrated in FIG. 2, the housing 102 may define an orifice 206. In some embodiments, the housing 102 of the sensing device 100 may be formed with the orifice 206 through various processes, such as with a subtractive manufacturing process (e.g., machining) or an additive manufacturing process (e.g., 3D printing). The subtractive manufacturing processes may include, but are not limited to, drilling, cutting etc. In some embodiments, the orifice 206 may be formed with various shapes. The shapes may include, but are not limited to, a cylindrical shape, a conical shape, a hemi-spherical shape, a cuboid shape, etc. In some embodiments, the orifice 206 may be machined on the top cover 106 of the housing 102. In some embodiments, the orifice 206 may be positioned under the membrane 104. In various examples, the orifice 206 may define a depth that may be similar to a thickness of the top cover 106 of the housing 102. In some embodiments, the orifice 206 of the housing 102 may be covered with the membrane 104.

In some embodiments, the sensing device 100 may comprise a gel 200 (FIG. 2). In some embodiments, the gel 200 of the sensing device 100 may be positioned within the orifice 206 of the housing 102. In some embodiments, the gel 200 is a bio compatible high thermal conductivity gel. In some embodiments, the gel 200 may have a thermal conductivity of 1.2 watts per meter-kelvin (W/(m·K)) or higher. In various examples, the gel 200 may have the thermal conductivity of at least 1.37 watts per meter-kelvin (W/(m·K)), such as at least 1.48 W/(m·K), such as at least 1.29 W/(m·K), such as at least 1.22 W/(m·K) and up to 3.0 W/(m·K), such as up to 2.25 W/(m·K). In various example, the gel 200 may correspond to at least one of a heat-conducting silicone grease coatings having a heat conducting coefficient value i.e., thermal conductivity of 3.6-6.0 W/(m·K). In some embodiments, the media 204 carried by the IV tube 202 may define one or more parameters. The one or more parameters may include, but are not limited to, a temperature of the media 204 and a pressure of the media 204. In some embodiments, the gel 200 may be configured to undergo a change in one or more attributes, based on change in the temperature and pressure of the media 204 due to one or more physical factors and/or one or more thermal factors. Further, the one or more physical factors responsible for change in the pressure of the media 204 may include, but are not limited to, height difference, flow resistance, one or more settings of the infusion pump, patient's vein condition, viscosity of the media 204 etc. Further, the height difference may describe a vertical distance between the cartridge containing the media 204, and a patient may affect the pressure of the media 204 flowing through the IV tube 202. Further, the flow resistance may be affected by a length of the IV tube 202 and a diameter of the IV tube 202, which may cause a change in pressure of the media 204. Further, the one or more settings of the infusion pump may affect a mechanical force applied to maintain a specific flow rate within the IV tube 202. Further, any adjustment in the one or more settings of the infusion pump may cause the change in pressure of the media 204. Further, the patient's vein condition, such as when the patient's vein collapses, may affect a resistance in the flow of the media 204 (e.g., increasing the resistance) and thus results in changing the pressure of the media 204.

In some embodiments, the one or more thermal factors may include, but are not limited to, ambient temperature, flow rate of the media 204 within the IV tube 202 etc. Further, the ambient temperature may describe that temperature in surroundings of the IV tube 202 may cause a change in temperature of the media 204. Further, the flow rate of the media 204 may affect a change in flow of the media 204, which may cause the change in temperature of the media 204. In some embodiments, when a volume of the media 204 within the IV tube 202 is kept constant, then the change in pressure of the media 204 may cause the change in temperature of the media 204. In some embodiments, the one or more attributes may comprise at least one or more physical attributes and one or more thermal attributes. In some embodiments, the one or more physical attributes may include, but are not limited to, viscosity of the gel 200, volume of the gel 200, elasticity of the gel 200 etc. In some embodiments, the one or more thermal attributes may include, but are not limited to, heat conductivity, thermal expansion etc.

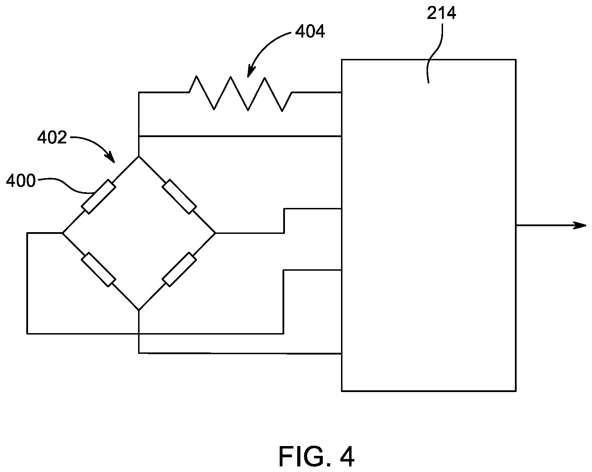

In some embodiments, the sensing device 100 may comprise at least one sensing element 208. In some embodiments, the at least one sensing element 208 may be operationally coupled to the gel 200. In some embodiments, the at least one sensing element 208 may be positioned within the orifice 206 of the housing 102 and in contact with the gel 200. In some embodiments, the at least one sensing element 208 of the sensing device 100 may be configured to directly interact with the gel 200 inside the orifice 206. In some embodiments, the at least one sensing element 208 may be configured to detect the change in the one or more attributes of the gel 200 to generate one or more signals. In some embodiments, the at least one sensing element 208 may be configured to generate electrical signals corresponding to the change in the one or more attributes of the gel 200. The one or more signals may be indicative of the change in the temperature and the pressure of the media 204 within the IV tube 202. For example, the gel 200 may be positioned such that the gel 200 is in thermal communication with the media 204. As used herein, the term "thermal communication" refers to heat being capable of traveling between the areas specified. As such, the one or more thermal attributes of the gel 200 may change based on a change of temperature of the media 204 within the IV tube 202. Similarly, the gel 200 may be positioned such that the gel 200 is in pressure communication with the media 204. As used herein, the term "pressure communication" refers to pressure being transferred between the areas specified. As such, the one or more physical attributes of the gel 200 may change based on a change of pressure of the media 204 within the IV tube 202. In some embodiments, the at least one sensing element 208 may comprise at least one pressure sensing element (P) 400 (FIG. 4) for sensing the one or more physical attributes and at least one temperature sensing element (T) 404 (FIG. 4) for sensing the one or more thermal attributes. Further, the at least one pressure sensing element (P) 400 may be a Wheatstone bridge. Further, the at least one temperature sensing element (T) 404 may be a resistor.

In some embodiments, the sensing device 100 may comprise a circuit board 210. In some embodiments, the circuit board 210 may be positioned along the housing 102. In some embodiments, the circuit board 210 may be coupled with the at least one sensing element 208. In some embodiments, the circuit board 210 of the sensing device 100 may correspond to a printed circuit board (PCB). In some embodiments, the at least one sensing element 208 of the sensing device 100 may be configured to provide the one or more signals to the circuit board 210. In some embodiments, the circuit board 210 may comprise a plurality of wires (not shown) that are configured to circulate the one or more signals within the circuit board 210. In some embodiments, the at least one sensing element 208 may be fabricated over the circuit board 210 through a wirebond technique. In some embodiments, the wirebond technique may facilitate in creating an electrical connection between the at least one sensing element 208 and the circuit board 210.

In some embodiments, the wirebond technique may involve a process of connecting a plurality of conducting wires 212 between the at least one sensing element 208 and the circuit board 210. In various examples, each of the plurality of conducting wires 212 may be composed of various materials such as gold, aluminum, copper etc. In some embodiments, the at least one sensing element 208 may be fabricated over the circuit board 210 through various processes. The various processes may include, but are not limited to, a soldering process, an adhering through a conductive adhesive etc. In some embodiments, the circuit board 210 of the sensing device 100 may facilitate fabrication of various other components such as resistors, capacitors etc. over the circuit board 210.

In some embodiments, the sensing device 100 may comprise at least one processing unit 214. In some embodiments, the at least one processing unit 214 of the sensing device 100 may be operationally coupled to the at least one sensing element 208. In some embodiments, the at least one processing unit 214 of the sensing device 100 may be fabricated on the circuit board 210. In some embodiments, the circuit board 210 may be configured to provide an electrical connection between the at least one sensing element 208 and the at least one processing unit 214. In some embodiments, the at least one processing unit 214 may be configured to receive the one or more signals. In some embodiments, the at least one processing unit 214 of the sensing device 100 may be configured to analyze the one or more signals. In some embodiments, the at least one processing unit 214 may be configured to determine a compensated temperature output and a compensated pressure output of the media 204. In some embodiments, the at least one processing unit 214 may be configured to determine the compensated temperature output and the compensated pressure output of the media 204 based at least on the one or more attributes.

In some embodiments, the at least one processing unit 214 may correspond to an application specific integrated circuit (ASIC). In some embodiments, the at least one processing unit 214 may be configured to receive the one or more signals from the at least one sensing element 208. In some embodiments, the at least one processing unit 214 may incorporate a plurality of algorithms. The plurality of algorithms within the at least one processing unit 214 may facilitate the at least one processing unit 214 to correct any inaccuracy in the one or more signals and/or any drift in the one or more signals. The inaccuracy in the one or more signals and/or the drift in the one or more signals may occur due to various external factors. The external factors may include, but are not limited to, high temperature operating conditions, fault in the at least one sensing element 208 etc. In some embodiments, the sensing device 100 may comprise a connector 216. In some embodiments, the connector 216 of the sensing device 100 may facilitate in connecting the sensing device 100 with various external devices. In some embodiments, the connector 216 may be coupled with the circuit board 210 through a plurality of connector pins 218.

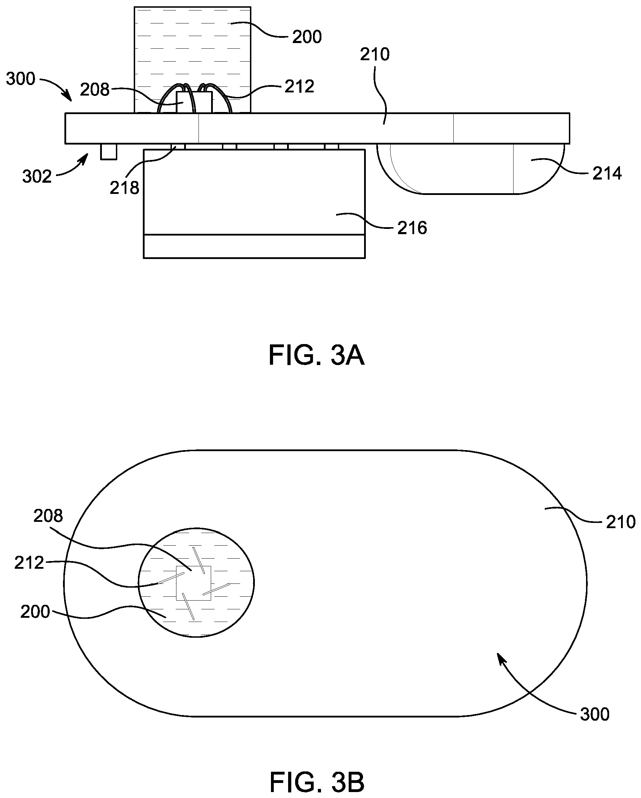

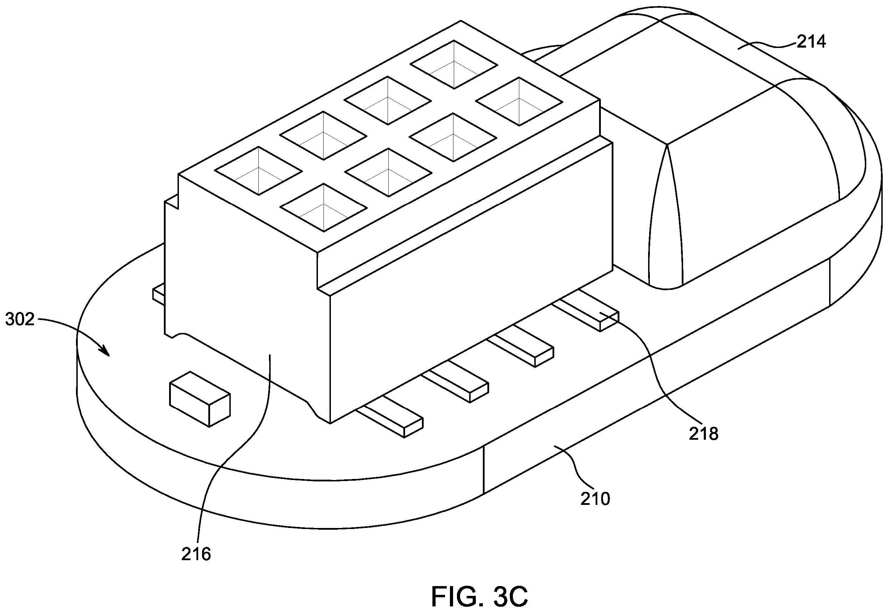

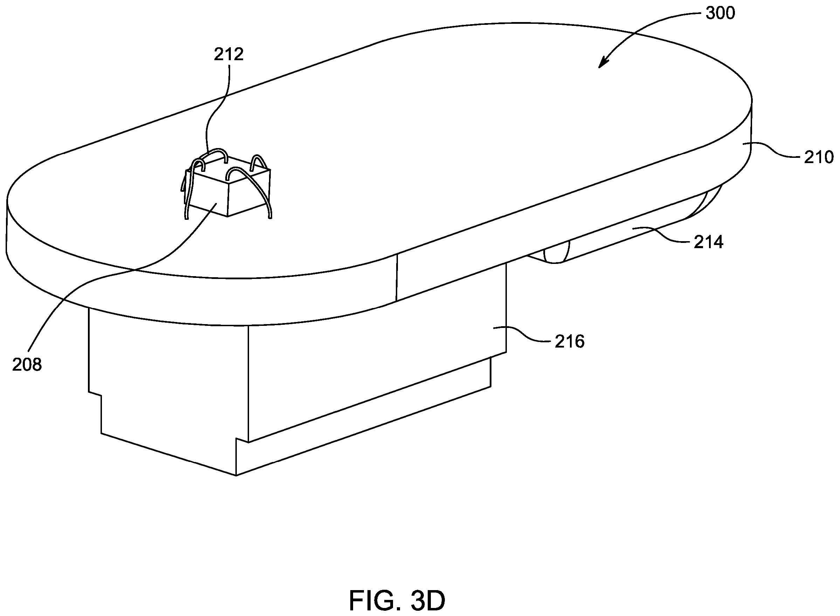

FIG. 3A illustrates a side view of the circuit board 210 of the sensing device 100, in accordance with an example embodiment of the present disclosure. FIG. 3B illustrates a top view of the circuit board 210, in accordance with an example embodiment of the present disclosure. FIG. 3C illustrates an isometric view of the circuit board 210, in accordance with an example embodiment of the present disclosure. FIG. 3D illustrates another isometric view of the circuit board 210, in accordance with an example embodiment of the present disclosure.

In some embodiments, the circuit board 210 may be positioned inside the housing 102 of the sensing device 100. In some embodiments, the circuit board 210 may comprise a top surface 300 and a bottom surface 302. In some embodiments, the top surface 300 of the circuit board 210 may be fabricated with the at least one sensing element 208. In some embodiments, the top surface 300 of the circuit board 210 may be operationally coupled with the gel 200. In some embodiments, the orifice 206 of the housing 102 may be filled with the gel 200. In some embodiments, the gel 200 may be encased around the at least one sensing element 208. In some embodiments, the gel 200 may be in contact with the IV tube 202 through the membrane 104. In some embodiments, the gel 200 may define the one or more attributes. In some embodiments, the one or more attributes of the gel 200 contained inside the orifice 206 of the housing 102 may correlate with the one or more parameters of the media 204. The one or more parameters of the media 204 may comprise the pressure of the media 204 and temperature of the media 204.

In some embodiments, the at least one sensing element 208 that may be fabricated on the top surface 300 of the circuit board 210 may be configured to detect the change in the one or more attributes. The at least one sensing element 208 may be configured to generate the one or more signals that may be indicative of the change in the temperature and the pressure of the media 204, based at least on the detected change in the one or more attributes of the gel 200. In some embodiments, the at least one sensing element 208 may be fabricated with the circuit board 210 through the plurality of conducting wires 212. In some embodiments, the at least one processing unit 214 may be fabricated with the bottom surface 302 of the circuit board 210. In various examples, the at least one processing unit 214 may be fabricated with the bottom surface 302 of the circuit board 210 through the soldering process. In some embodiments, the at least one processing unit 214 may be configured to receive the one or more signals from the at least one sensing element 208 through the circuit board 210. In some embodiments, the at least one processing unit 214 may be configured to analyze the one or more signals to determine the compensated temperature output and the compensated pressure output of the media 204.

In some embodiments, the sensing device 100 may comprise the connector 216. In some embodiments, the connector 216 of the sensing device 100 may be fabricated with the bottom surface 302 of the circuit board 210. In some embodiments, the connector 216 of the sensing device 100 may facilitate in connecting the sensing device 100 with various external devices. The external devices may comprise at least one of a display panel, a storage module etc. In some embodiments, the connector 216 may be constructed with various shapes such as rectangular shape, square shape etc. In some embodiments, the connector 216 may be coupled with the circuit board 210 through the plurality of connector pins 218. In some embodiments, each of the plurality of connector pins 218 may provide an electrical connection between the connector 216 and the circuit board 210.

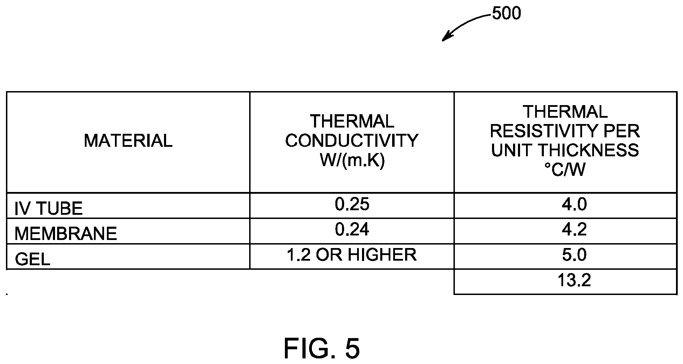

FIG. 4 illustrates a circuit diagram of the sensing device 100, in accordance with an example embodiment of the present disclosure. FIG. 5 illustrates a table 500 showing calibration data associated with the sensing device 100, in accordance with an example embodiment of the present disclosure.

In some embodiments, the at least one sensing element 208 may comprise the at least one pressure sensing element (P) 400. In some embodiments, the at least one pressure sensing element (P) 400 may be configured to sense the one or more physical attributes. In some embodiments, the at least one pressure sensing element (P) 400 is the Wheatstone bridge. In some embodiments, the Wheatstone bridge 400 may correspond to an electrical circuit. In some embodiments, the Wheatstone bridge 400 may be configured to measure changes in resistance within the electrical circuit. In some embodiments, a conventional Wheatstone bridge 400 may comprise four resistors arranged in a diamond-shaped circuit. The diamond-shaped circuit having the four resistors may comprise two parallel branches. In some embodiments, when the Wheatstone bridge 400 corresponds to the at least one pressure sensing element (P) 400, the Wheatstone bridge 400 may comprise four strain gauges 402 arranged in the diamond-shaped circuit. The four strain gauges 402 may comprise two parallel branches. In some embodiments, each of the four strain gauges 402 may be operationally coupled with the gel 200. In some embodiments, a predefined amount of voltage may be applied across the Wheatstone bridge 400 and an output voltage may be provided at midpoints of the two parallel branches. In some embodiments, when a pressure is applied on the gel 200 by the media 204 through the IV tube 202 and the membrane 104, the gel 200 may deform causing each of the four strain gauges 402 to either stretch or compress. In some embodiments, the stretching or compressing of the four strain gauges 402 may lead to a change in the output voltage of the Wheatstone bridge 400. In some embodiments, the change in output voltage of the Wheatstone bridge 400 may correspond to the change in pressure of the media 204.

In some embodiments, the sensing device 100 may comprise the at least one temperature sensing element (T) 404. In some embodiments, the at least one temperature sensing element (T) 404 may be configured to sense the one or more thermal attributes. In some embodiments, the at least one temperature sensing element (T) 404 of the sensing device 100 may correspond to the resistor 404. In some embodiments, the resistor 404 of the at least one sensing element 208 may be operationally coupled with the gel 200 of the sensing device 100. In some embodiments, when a predefined voltage is applied to the resistor 404, an output voltage may be provided by the resistor 404. In some embodiments, when the temperature of the media 204 changes, the resistance of the resistor 404 may increase or decrease, causing a change in the output voltage of the resistor 404. The change in output voltage of the resistor 404 may correspond to the change in temperature of the media 204.

In some embodiments, the sensing device 100 may comprise the at least one processing unit 214. In some embodiments, the at least one processing unit 214 may correspond to the ASIC 214. In some embodiments, the at least one processing unit 214 may be operationally coupled to the at least one sensing element 208. In some embodiments, the at least one processing unit 214 may be coupled to the Wheatstone bridge 400 and the resistor 404. In some embodiments, the at least one processing unit 214 may be configured to receive the one or more signals from the at least one sensing element 208. In some embodiments, the at least one processing unit 214 of the sensing device 100 may be configured to determine the temperature output and the pressure output of the media 204 within the IV tube 202, based on the detected change in the one or more attributes of the gel 200. In some embodiments, the at least one processing unit 214 of the sensing device 100 may calibrate the determined temperature output and pressure output of the media 204 based at least on the one or more coefficients, to determine a compensated temperature output (Tout) and a compensated pressure output (Pout) of the media 204, using a second order calibration algorithm or any other calibration algorithm known in the art.

In some embodiments, the at least one processing unit 214 of the sensing device 100 may be calibrated to provide the compensated temperature output (Tout) of the media 204, based on calibration data, such as the calibration data that is illustrated in FIG. 5. For example, the calibration data may include known data (e.g., thermal conductivity coefficients and/or thermal resistivity coefficients for the IV tube and/or various components of the sensing device (e.g., the membrane 104 and/or the gel 200)).

FIG. 5 provides a table 500 that comprises calibration data, in accordance with an example embodiment. In some embodiments, the IV tube 202, the membrane 104, and the gel 200 of the sensing device 100 may have one or more coefficients. The one or more coefficients may comprise a thermal conductivity (W/(m·K)) and a thermal resistivity per unit thickness °C/W. In some embodiments, the IV tube 202 may have the thermal conductivity of 0.25 W/(m·K). Further, the IV tube 202 may have the thermal resistivity per unit thickness of 4.0 °C/W. In some embodiments, the membrane 104 may have the thermal conductivity of 0.24 W/(m·K). Further, the membrane 104 may have the thermal resistivity per unit thickness of 4.2 °C/W. In some embodiments, the gel 200 may have the thermal conductivity of 1.2 W/(m·K) or higher. Further, the gel 200 may have the thermal resistivity per unit thickness of 5.0 °C/W. In some embodiments, during calculation of the compensated temperature output (Tₒᵤₜ) and the compensated pressure output (Pₒᵤₜ) of the media 204 by the at least one processing unit 214, a cumulative thermal resistivity of 13.2 °C/W may be taken into account. In some embodiments, during calculation of the compensated temperature output (Tₒᵤₜ) of the media 204 by the at least one processing unit 214, a cumulative thermal conductivity of 0.69 W/(m·K) may be taken into account. In some embodiments, the sensing device 100 may be calibrated based on the cumulative thermal resistivity and the cumulative thermal conductivity, such that the at least one processing unit 214 may provide the compensated temperature output (Tₒᵤₜ) of the media 204.

In some embodiments, at least one processing unit 214 may be calibrated to provide the compensated pressure output (Pₒᵤₜ) of the media 204. In some embodiments, the IV tube 202, the membrane 104, and the gel 200 of the sensing device 100 may have one or more physical coefficients. The one or more physical coefficients may comprise a viscosity of the media 204, thickness of the IV tube 202, thickness of the membrane 104, and viscosity of the gel 200. In some embodiments, during calculation of the compensated pressure output (Pₒᵤₜ) of the media 204 by the at least one processing unit 214, the one or more physical coefficients may be taken into account. In some embodiments, the sensing device 100 may be calibrated based on the one or more physical coefficients such that the at least one processing unit 214 may provide the compensated pressure output (Pₒᵤₜ) of the media 204.

Even though the specific example of FIG. 5 is provided, it should be understood that the compensated temperature output (Tₒᵤₜ) and/or the compensated pressure output (Pₒᵤₜ) of the media 204 may vary depending on the calibration data, which may vary depending on, for example, materials used.

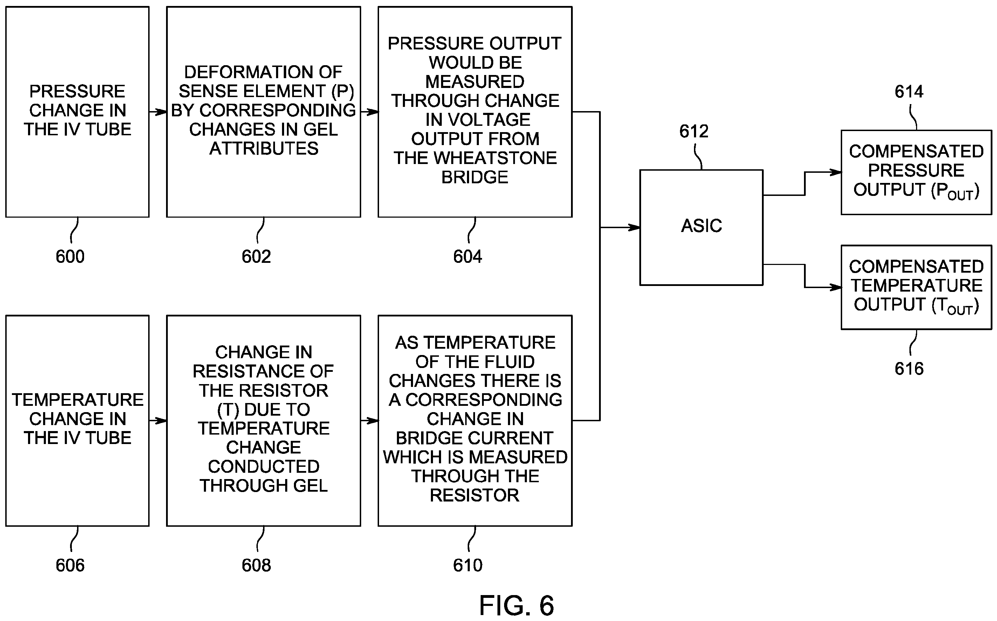

FIG. 6 illustrates a flowchart showing a method performed by the sensing device 100, in accordance with an example embodiment of the present disclosure.

At operation 600, the sensing device 100 may be installed within the infusion pump. Further, the IV tube 202 of the infusion pump may be configured to carry the media 204. In some embodiments, the media 204 may define the one or more parameters such as the temperature of the media 204 or pressure of the media 204. In some embodiments, the sensing device 100 may comprise the gel 200 that may be positioned in contact with the IV tube 202. In one instance, when the media 204 carried by the IV tube 202 undergoes a change in flow while being carried by the IV tube 202, then the gel 200 may undergo the change in the one or more attributes based on the change in the pressure of the media 204.

At operation 602, the sensing device 100 may comprise the at least one sensing element 208. In some embodiments, the at least one sensing element 208 may be operationally coupled with the gel 200. Further, the at least one sensing element 208 may comprise the at least one pressure sensing element (P) 400. In some embodiments, the at least one pressure sensing element (P) 400 may experience deformation due to the change in the one or more attributes.

At operation 604, the at least one pressure sensing element (P) 400 is the Wheatstone bridge 400. In some embodiments, the Wheatstone bridge 400 may be supplied with the input voltage and the Wheatstone bridge 400 may be configured to provide the output voltage. In some embodiments, the Wheatstone bridge 400 may be configured to provide the one or more signals (i.e. the output voltage) corresponding to the change in the one or more attributes.

At operation 606, the sensing device 100 may comprise the gel 200 that is positioned in contact with the IV tube 202 through the membrane 104. In one instance, when the IV tube 202 carrying the media 204 experiences a change in temperature due to various internal or external factors, then the gel 200 may undergo the change in the one or more attributes based on change in the temperature of the media 204.

At operation 608, the sensing device 100 may comprise the at least one sensing element 208. In some embodiments, the at least one sensing element 208 may be operationally coupled with the gel 200. Further, the at least one sensing element 208 may comprise the at least one temperature sensing element (T) 404. In some embodiments, the at least one temperature sensing element (T) 404 may experience deformation due to the change in the one or more attributes.

At operation 610, the at least one temperature sensing element (T) is the resistor 404. In some embodiments, the resistor 404 may be supplied with the input voltage and the resistor 404 may be configured to provide the output voltage. In some embodiments, the resistor 404 may be configured to provide the one or more signals (i.e., the output voltage) corresponding to the change in the one or more attributes.

At operation 612, the sensing device 100 may comprise the at least one processing unit 214 (i.e., ASIC). In some embodiments, the at least one processing unit 214 may be operationally coupled with the at least one sensing element 208. In some embodiments, the at least one sensing element 208 may be configured to provide the one or more signals to the at least one processing unit 214. In some embodiments, the at least one processing unit 214 may be configured to determine the temperature output and the pressure output of the media 204 within the IV tube 202 based on the detected change in the one or more attributes of the gel 200.

At operation 614, the at least one processing unit 214 of the sensing device 100 may be calibrated to provide the compensated pressure output (Pₒᵤₜ) of the media 204. In some embodiments, the IV tube 202, the membrane 104, and the gel 200 of the sensing device 100 may have the one or more physical coefficients. The one or more physical coefficients may comprise the viscosity of the media 204, thickness of the IV tube 202, thickness of the membrane 104, and viscosity of the gel 200. In some embodiments, during calculation of the compensated pressure output (Pₒᵤₜ) of the media 204 by the at least one processing unit 214, the one or more physical coefficients may be taken into account.

At operation 616, the at least one processing unit 214 of the sensing device 100 may be calibrated to provide the compensated temperature output (Tₒᵤₜ) of the media 204. In some embodiments, the at least one processing unit 214 of the sensing device 100 may be calibrated to provide the compensated temperature output (Tₒᵤₜ) of the media 204 based on the calibration data. In some embodiments, the calibration data may comprise the one or more coefficients of the IV tube 202, the membrane 104, and the gel 200 of the sensing device 100. The one or more coefficients may comprise the thermal conductivity (W/(m·K)) and the thermal resistivity per unit thickness °C/W. Further, the one or more coefficients may be taken into account during calculation of the compensated temperature output (Tₒᵤₜ) of the media 204.

In some embodiments, a method of the sensing device 100 is disclosed. The method of the sensing device 100 may comprise one or more operations. At an operation, the one or more attributes of the gel 200 positioned within the orifice 206 defined by the housing 102 of the sensing device 100 may undergo a change based on change in temperature or pressure. Further, the sensing device 100 may comprise the membrane 104 positioned over the orifice 206 and in contact with the gel 200 and the intravenous (IV) tube 202 carrying media 204. Further, the media 204 is the IV fluid and the membrane 104 is the silicon membrane 104. At another operation, the at least one sensing element 208 may be operationally coupled to the gel 200 and may be configured to detect the change in the one or more attributes of the gel 200. The one or more attributes may comprise the at least one or more physical attributes and the one or more thermal attributes. At another operation, the at least one processing unit 214 operationally coupled to the at least one sensing element 208 may be configured to determine the temperature output and the pressure output of the media 204 within the IV tube 202 based on the detected change in the one or more attributes of the gel 200.

The present disclosure efficiently determines a change in temperature or pressure of the media 204 (e.g., the IV fluid) carried by the IV tube 202. The present disclosure does not require an additional or external component to measure the temperature of the media 204 that is carried through the IV tube 202. Embodiments of the present disclosure may provide a real-time heat transfer due a low resistance channel between the gel 200 and the IV tube 202 The low resistance channel may also facilitate a faster rate of heat transfer between the media 204 in the IV tube 202 and the at least one sensing element 208. The present disclosure may compute both change in the pressure of the media 204 and the temperature of the media 204, through the at least one processing unit 214 (e.g., ASIC 214).

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A sensing device comprising:
a housing that defines an orifice;
a gel positioned within the orifice of the housing, wherein the gel is configured to undergo a change in one or more attributes based on change in temperature or pressure;
a membrane positioned over the orifice and in contact with the gel, wherein the membrane is configured to be positioned in contact with an intravenous (IV) tube carrying media;
at least one sensing element operationally coupled to the gel, wherein the at least one sensing element is configured to detect the change in the one or more attributes of the gel; and
at least one processing unit operationally coupled to the at least one sensing element, wherein the at least one processing unit is configured to determine a temperature output and a pressure output of the media within the IV tube based on the detected change in the one or more attributes of the gel.

2. The sensing device of claim 1, wherein the media is intravenous (IV) fluid.

3. The sensing device of claim 1, wherein the membrane is a silicon membrane.

4. The sensing device of claim 1, wherein the gel is a bio compatible high thermal conductivity gel that has a thermal conductivity of 1.2 watts per meter-kelvin (W/(m·K)) or higher.

5. The sensing device of claim 1, wherein the one or more attributes comprises at least physical attributes and one or more thermal attributes.

6. The sensing device of claim 5, wherein the at least one sensing element comprises at least one pressure sensing element (P) for sensing the at least one physical attributes and at least one temperature sensing element (T) for sensing the one or more thermal attributes.

7. The sensing device of claim 6, wherein the at least one pressure sensing element (P) is at least one Wheatstone bridge and the at least one temperature sensing element (T) is at least one resistor.

8. The sensing device of claim 1, further comprising a circuit board positioned within the housing, wherein the circuit board is coupled with the at least one sensing element and the at least one processing unit.

9. The sensing device of claim 1, wherein the at least one sensing element is positioned within the orifice of the housing and in contact with the gel.

10. The sensing device of claim 1, wherein the at least one processing unit corresponds to an application specific integrated circuit (ASIC).

11. The sensing device of claim 1, wherein the at least one processing unit is configured to calibrate the determined temperature output and pressure output of the media based at least on one or more coefficients, to determine a compensated temperature output and a compensated pressure output of the media.

12. A method for detecting a temperature and a pressure of media within an intravenous (IV) tube, the method comprising:
detecting, via at least one sensing element operationally coupled to a gel, a change in one or more attributes of the gel, wherein the gel is positioned proximate to the IV tube and in thermal communication with the IV tube; and
determining, via at least one processing unit operationally coupled to the at least one sensing element, a temperature output and a pressure output of the media within the IV tube based on the detected change in the one or more attributes of the gel.

13. The method of claim 12, wherein the media is intravenous (IV) fluid.

14. The method of claim 12, wherein the gel is a bio compatible high thermal conductivity gel that has a thermal conductivity of 1.2 watts per meter-kelvin (W/(m·K)) or higher.

15. The method of claim 12, wherein the one or more attributes comprises at least one physical attributes and one or more thermal attributes.
